# EUROPÄISCHE PATENTSCHRIFT

(11) **EP 0 761 615 B1**
(45) Veröffentlichungstag und Bekanntmachung des Hinweises auf die Patenterteilung: **08.03.2000**
(21) Anmeldenummer: 96113096.0
(22) Anmeldetag: 14.08.1996
(51) Int. Cl.: C03B 33/03, C03B 33/04

(54) **Maschine zum Schneiden von gewölbten Glasscheiben**
Machine for cutting curved glass plates
Machine pour couper des feuilles de verre bombées

(30) Priorität: 18.08.1995 DE 19530503
(43) Veröffentlichungstag der Anmeldung: 12.03.1997
(73) Patentinhaber: HEGLA Fahrzeug- u. Maschinenbau GmbH & Co. KG, D-37688 Beverungen (DE)
(72) Erfinder: Laser, Lothar, 72663 Grossbettlingen (DE)
(74) Vertreter: Solf, Alexander, Dr.

(56) Entgegenhaltungen:
- EP-A- 0 437 418
- EP-A- 0 550 408
- DE-A- 3 415 264
- FR-A- 639 707
- FR-E- 34 051
- US-A- 1 765 846
- US-A- 2 137 112
- US-A- 3 859 878
- US-A- 3 880 029
- SOVIET INVENTIONS ILLUSTRATED Section Ch, Week 8347 Derwent Publications Ltd., London, GB; Class L01, AN 83-825445 XP002020924 & SU 990 695 A (ORLOVO FOOD IND GLA) , 25.Januar 1983
- PATENT ABSTRACTS OF JAPAN vol. 017, no. 285 (C-1066), 2.Juni 1993 & JP 05 017175 A (SHIRAI TETSUKOUSHIYO KK), 26.Januar 1993,

## Beschreibung

Die Erfindung betrifft eine Kalottenschneidmaschine zum Schneiden von sphärisch gewölbtem Glas.

Bekannte Kalottenschneidmaschinen weisen einen Schneidtisch mit einer sphärisch gewölbten Schneidplatte zur Aufnahme von entsprechend sphärisch gewölbten Glaskalotten auf. Oberhalb der Schneidplatte befindet sich ein Schneidkopfhalter mit einem Schneidkopf und einem Antrieb. Der Antrieb bewegt den Schneidkopf entlang einer Außenkontur einer in den Schneidkopfhalter eingelegten Schablone, so daß ein am Schneidkopf befestigtes Schneidrad auf der Glaskalotte die durch die Schablone vorgegebene Schnittform abfährt und eine Schnittlinie in die Glaskalotte einkerbt. Für unterschiedliche Spiegelkonturen müssen entsprechende Schablonen vorgesehen werden, deren Lagerung und Verwaltung einen beträchtlichen Aufwand bedeutet.

Die gewölbte Schneidplatte ist auf dem Schneidtisch an vier paarweise gegenüberliegenden Seiten seitlich auf jeweils einer eine Bogenbahn aufweisenden Konsole gelagert und mittels Spindelantrieb auf den Bogenbahnen hin und her verfahrbar, so daß durch die Hin- und Herbewegung auf den beiden Konsolen ein Flächenbereich der Schneidplatte unter dem Schneidkopfhalter angeordnet werden kann. Hierdurch ist es möglich, aus einer Glaskalotte mehrere Glasteile durch entsprechende Formschnitte auszuschneiden. Eine solche Kalottenschneidmaschine ist aus dem Prospekt "Präzisions-Systeme für die Bearbeitung technischer Gläser" der Firma LASER Maschinenbau GmbH & Co KG von März 1995 bekannt.

Aus der US-A-3 880 029 ist ein Glasschneidetisch zum Schneiden von ebenen Glasscheiben bekannt. Der Glasschneidetisch verfügt über eine ebene Schneidplatte, die auf dem Schneidetisch lagert, wobei der Schneidetisch in X- und Y-Richtung verfahrbar angeordnet ist. Über dem Schneidetisch sind zwei rechtwinklig zueinander angeordnete Schneidbrücken vorgesehen, die mit vertikal absenkbaren Schneidelementen ausgerüstet sind. Die Schneidelemente sind an den Schneidbrücken ortsfest montiert. Der Schneidtisch kann nicht gleichzeitig in X- und Y-Richtung verfahren werden. Zunächst wird die X-Richtung abgefahren und anschließend die Y-Richtung.

Die Kalottenschneidmaschinen werden z.B. zur Herstellung von sphärisch gewölbten Außenspiegeln für Kraftfahrzeuge verwendet. Hierzu wird in den Schneidkopfhalter eine Schablone eingelegt, die der Außenkontur des auszuschneidenden Spiegels entspricht. Auf den Schneidtisch wird eine verspiegelte Glaskalotte gelegt und durch Hin- und Herbewegen und Drehen der Schneidplatte jeweils der Flächenbereich unter den Schneidkopfhalter angeordnet, aus dem ein Spiegel ausgeschnitten werden soll. Die Glaskalotte wird hierbei so bewegt, daß der Schwerpunkt des Flächenbereichs, aus dem der Spiegel ausgeschnitten werden soll, den höchsten Punkt der Glaskalotte bildet, so daß das Schneidrad beim Kerben der den Formschnitt bildenden Schnittlinie diesen Punkt umfährt. Durch die Wölbung der Glaskalotte steht das Schneidrad schräg bzw. gewinkelt zur Glaskalottenoberfläche und fährt meist zudem Höhenunterschiede von einigen Millimetern ab, die entsprechend unter Aufrechterhaltung des Schneiddruckes ausgeglichen werden müssen. Bei großflächigen Außenspiegeln, beispielsweise für Lastkraftwagen, können die Höhenunterschiede bis zu 19 mm betragen. Je größer die Wölbung der Glasplatte ist, desto stärker ist die Schrägstellung und desto größer sind die Höhenunterschiede.

Aufgrund der Höhenunterschiede kann der an das Schneidrad anzulegende Schneiddruck nur mit einem beträchtlichen technischen Aufwand in akzeptabler Weise entlang eines gesamten Formschnittes aufrechterhalten werden. Durch die Schrägstellung des Schneidrades wirkt der angelegte Schneiddruck nicht senkrecht auf die Oberfläche der Glaskalotte, weshalb die erzielbaren Schnittgeschwindigkeiten geringer als beim Schneiden von ebenflächigen Glasplatten sind. Die Schrägstellung des Schneidrades verursacht auch eine schlechtere Schnitt- und Bruchkantenqualität. An den Bruchkanten entstehen häufig Abplatzungen von Glassplittern, so daß die ausgebrochenen Spiegel für eine Weiterverarbeitung unbrauchbar werden.

Ferner kann durch die Schrägstellung des Schneidrades die Form der Glasteile durch die schrägverlaufende Kantenkontur der Schneidfläche von der Form der Schablone abweichen.

Zur Herstellung von sogenannten asphärischen Spiegeln, das sind Spiegel mit Bereichen unterschiedlicher Wölbung, werden kreisförmige Glaskalotten verwendet, die an ihrem Randbereich stärker gekrümmt sind. In diesem stärker gekrümmten bzw. asphärischen Bereich ist das Schneidrad stärker schräg gestellt, weshalb die durch das Schrägstellen hervorgerufenen Nachteile noch stärker zur Geltung kommen.

Da die Glaskalotte mit dem Schneidrad nicht vollständig durchgeschnitten, sondern nur etwas eingekerbt wird, werden die einzelnen Glasteile nach dem eigentlichen Schneid- bzw. Kerbvorgang durch eine Person von Hand ausgebrochen. Hierzu werden zwischen den einzelnen Schnittformen sogenannte Freischnitte eingebracht, damit die zwischen den Glasteilen liegenden Glasbereiche abschnittsweise von den Glasteilen entfernt werden können. Diese Freischnitte müssen bei diesen mittels Schablonen gesteuerten Kalottenschneidmaschinen von Hand eingebracht werden. Das Einbringen der Freischnitte erfordert viel Zeit und Geschick und wird von einer im Glasschneiden erfahrenen Person vorgenommen, die die für die Freischnitte geeigneten Stellen erkennen muß.

Aufgabe der Erfindung ist, eine Kalottenschneidmaschine zu schaffen, mit der das Schneiden der Schnittlinie mit besserer Qualität und höherer Geschwindigkeit bei weniger Ausschuß erfolgen kann.

Die Aufgabe wird durch eine Kalottenschneidmaschine mit den Merkmalen des Anspruchs 1 gelöst. Vorteilhafte Ausgestaltungen sind in den Unteransprüchen gekennzeichnet.

Die erfindungsgemäße Kalottenschneidmaschine sieht einen ortsfesten Schneidhalter mit einem Schneidelement vor, das senkrecht zur Oberfläche einer gewölbten Schneidplatte eines Schneidtisches angeordnet ist, wobei die gewölbte Schneidplatte derart gelagert und antreibbar ist, daß sie entlang einer gewölbten Oberflächenbahn in zwei zueinander senkrechten Richtungen hin und her bewegbar ist und eine Steuereinrichtung vorgesehen ist, die eine Antriebseinheit so steuert, daß beim Schneidvorgang die Schneidplatte unter dem ortsfesten Schneidelement entlang vorbestimmter Schnittlinien bewegt wird. Hierbei wird eine senkrechte Ausrichtung des Schneidelements beim Schneidvorgang aufrechterhalten, wodurch mit besserer Qualität und höherer Geschwindigkeit die Schnittlinien in die Glaskalotte eingebracht werden können, wobei die Gefahr von Abplatzungen und damit die sich ergebende Ausschußmenge verringert wird.

Die Erfindung wird nachfolgend beispielhaft anhand der Zeichnungen näher erläutert. Es zeigen:
- Fig. 1: eine schematisch vereinfachte perspektivische Ansicht einer erfindungsgemäßen Kalottenschneidmaschine;
- Fig. 2: eine Draufsicht auf ein Tischgestell für eine erfindungsgemäße Kalottenschneidmaschine;
- Fig. 3: eine Vorderansicht einer Kalottenschneidmaschine mit dem in Fig. 2 gezeigten Tischgestell;
- Fig. 4: eine Seitenansicht der in Fig. 3 gezeigten Kalottenschneidmaschine;
- Fig. 5: eine schematisch vereinfachte perspektivische Ansicht eines weiteren Ausführungsbeispieles einer erfindungsgemäßen Kalottenschneidmaschine;
- Fig. 6: eine Unteransicht des Tischrahmens und der Schneidplatte der in Fig. 5 gezeigten Kalottenschneidmaschine;
- Fig. 7: eine schematisch sehr vereinfachte seitliche Teilansicht des in Fig. 6 gezeigten Tischrahmens und der Schneidplatte.

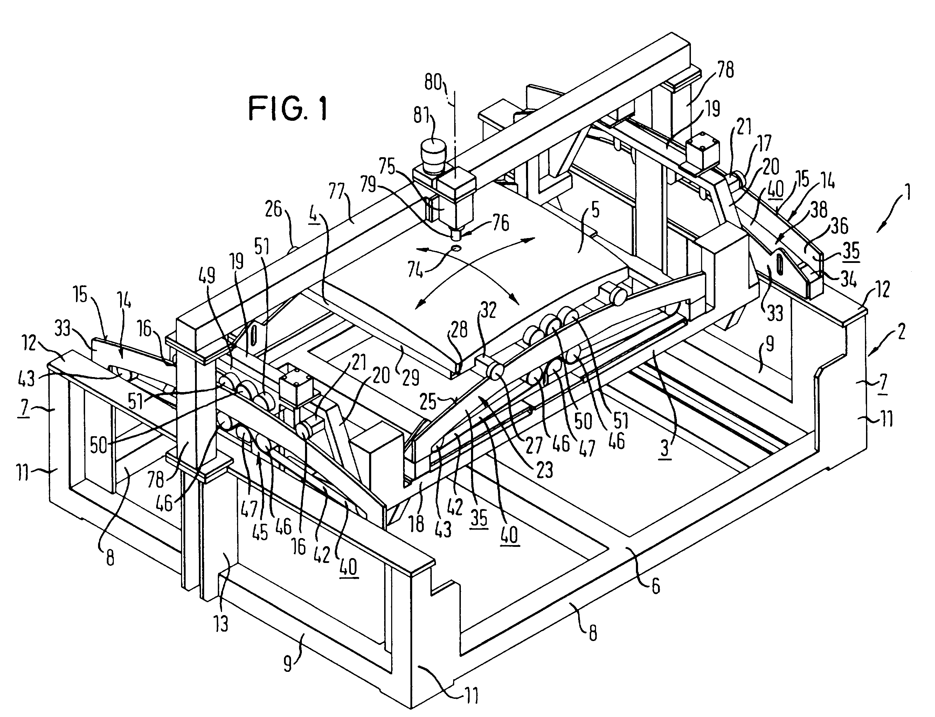

In den Figuren 1 bis 4 ist ein erstes Ausführungsbeispiel einer erfindungsgemäßen Kalottenschneidmaschine dargestellt.

Sie weist einen Schneidtisch 1 auf, der aus einem Maschinengestell 2, einem Hängerahmen 3, einem Tischrahmen 4 und einer Schneidplatte 5 besteht, die auf dem Tischrahmen 4 aufliegt.

Das Maschinengestell 2 besteht aus einer stabilen, verwindungssteifen Rahmenkonstruktion, die im Querschnitt U-förmig ist und einen Bodenrahmen 6 und zwei Seitenrahmen 7 aufweist. Der Bodenrahmen 6 wird durch zwei seitliche Maschinengestellängsstreben 8, die an ihren Enden mit zwei unteren Maschinengestellquerstreben 9 verbunden sind, gebildet. Die unteren Maschinengestellquerstreben 9 sind zugleich Bestandteil der Seitenrahmen 7, die an den Eckbereichen zwischen den Maschinengestellängsstreben 8 und den unteren Maschinengestellquerstreben 9 jeweils einen senkrecht angeordneten Fuß 11 aufweisen. Die Füße 11 sind an ihrem oberen Ende mit parallel zu den unteren Maschinengestellquerstreben 9 verlaufenden oberen Maschinengestellquerstreben 12 verbunden. In der Längsmitte der Maschinengestellquerstreben 9, 12 ist ein die Maschinengestellquerstreben 9, 12 verbindender vertikaler Tragpfosten 13 angeordnet.

Auf jeder oberen Maschinengestellquerstrebe 12 ist eine erste Konsole 14 zur Lagerung des Hängerahmens 3 befestigt. Die Konsolen 14 weisen eine als Führungsbahn dienende bogenförmige Oberkante 15 auf, auf der der Hängerahmen 3 mittels nach außen vorstehender Lauf- bzw. Führungsrollen 16, 17 aufliegt.

Der Hängerahmen 3 besteht aus zwei Hängerahmenlängsstreben 18, die parallel zu den Maschinengestellängsstreben 8 und zwei Hängerahmenquerstreben 19, die in einer Ausgangsstellung des Hängerahmens 3 parallel zu den Maschinengestellquerstreben 9, 12 angeordnet sind. Die Hängerahmenquerstreben 19 sind etwas kürzer als der Abstand zwischen den Hängerahmenlängsstreben 18 und oberhalb der Hängerahmenlängsstreben 18 angeordnet. Die Enden der Hängerahmenlängsstreben 18 sind mit den Enden der Hängerahmenquerstreben 19 jeweils über kurze, schräg verlaufende Verbindungsstreben 20 verbunden.

An den von den Verbindungsstreben 20 und den Hängerahmenquerstreben 19 gebildeten Eckbereichen sind horizontal nach außen vorstehende Lagerzapfen 21 angeordnet, an welchen die Lauf- bzw. Führungsrollen 16, 17 drehbar gelagert sind.

Auf den Hängerahmenlängsstreben 18 ist jeweils eine zweite Konsole 23 zur Lagerung des Tischrahmens 4 befestigt. Die zweiten Konsolen 23 weisen wie die ersten Konsolen 13 eine als Führungsbahn dienende bogenförmige Oberkante 25 auf, auf der der Tischrahmen 4 mittels nach außen vorstehender Lauf- bzw. Führungsrollen 26, 27 aufliegt.

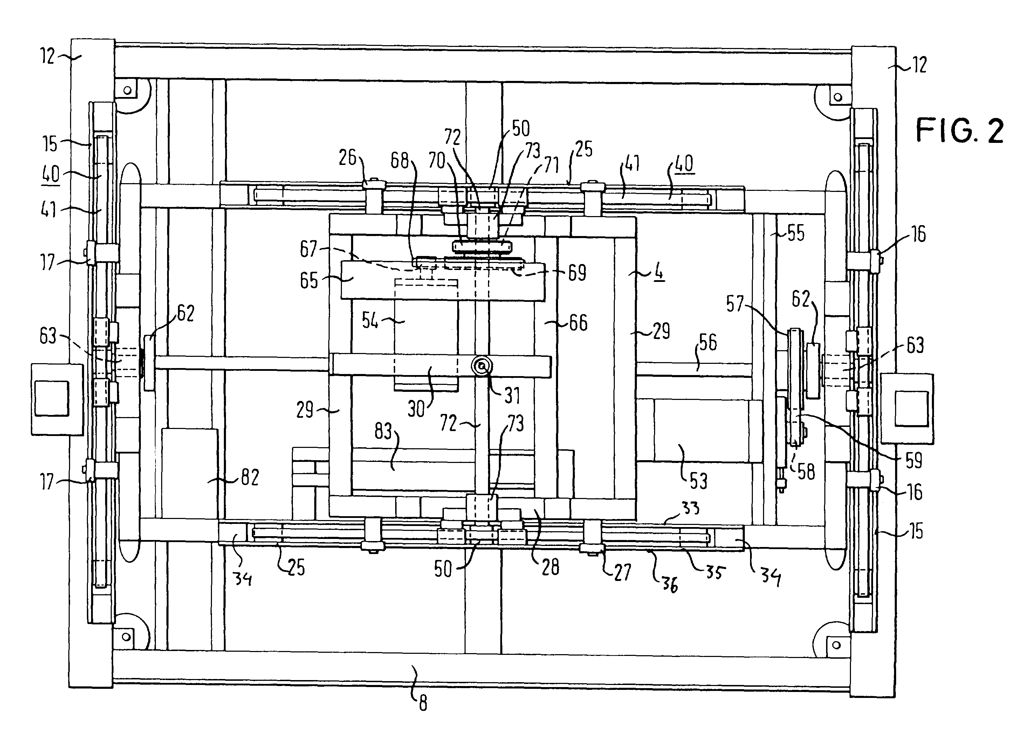

Der Tischrahmen 4 (Fig. 2) besteht aus zwei Tischrahmenlängsstreben 28 und zwei Tischrahmenquerstreben 29, die in der Form eines Rechtecks angeordnet sind. In einer Ausgangsstellung des Tischrahmens 4 sind die Tischrahmenlängsstreben 28 parallel zu den Maschinengestellängsstreben 8 und die Tischrahmenquerstreben 29 parallel zu den Maschinengestellquerstreben 9, 12 angeordnet. Die Tischrahmenquerstreben 29 sind an ihrer Längsmitte mit einer mittigen Tischrahmenlängsstrebe 30 verbunden. An der Längsmitte der Tischrahmenlängsstrebe 30 ist ein Saugkopf 31 angeordnet. Die Lauf- bzw. Führungsrollen 26, 27 sind an horizontalen Lagerzapfen 32 gelagert, die an den Endbereichen der Tischrahmenlängsstreben 28 befestigt sind.

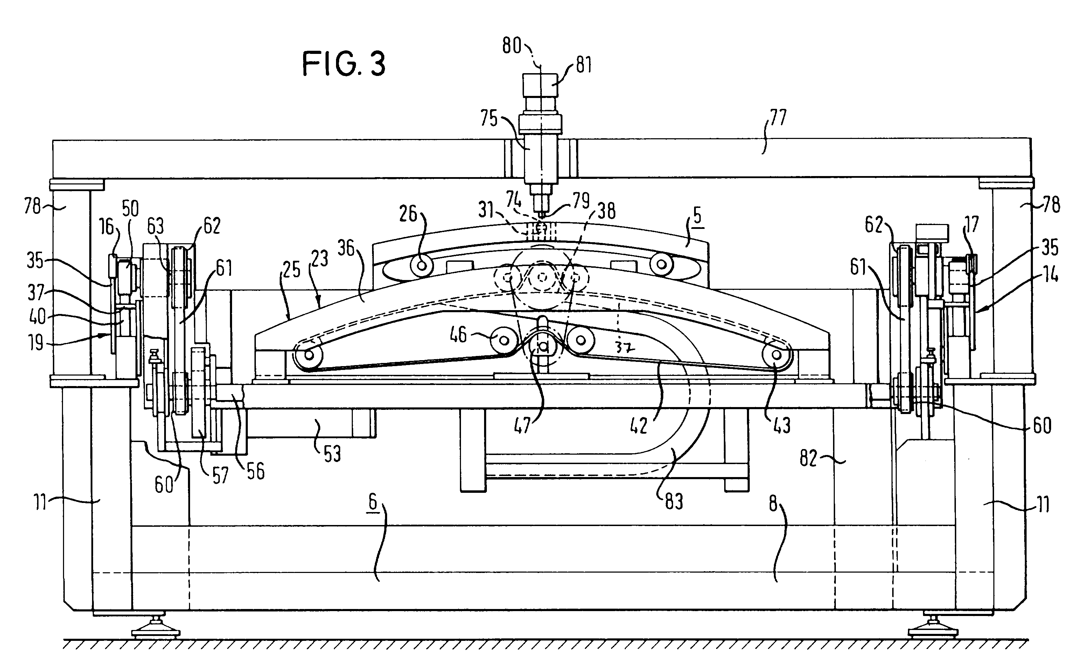

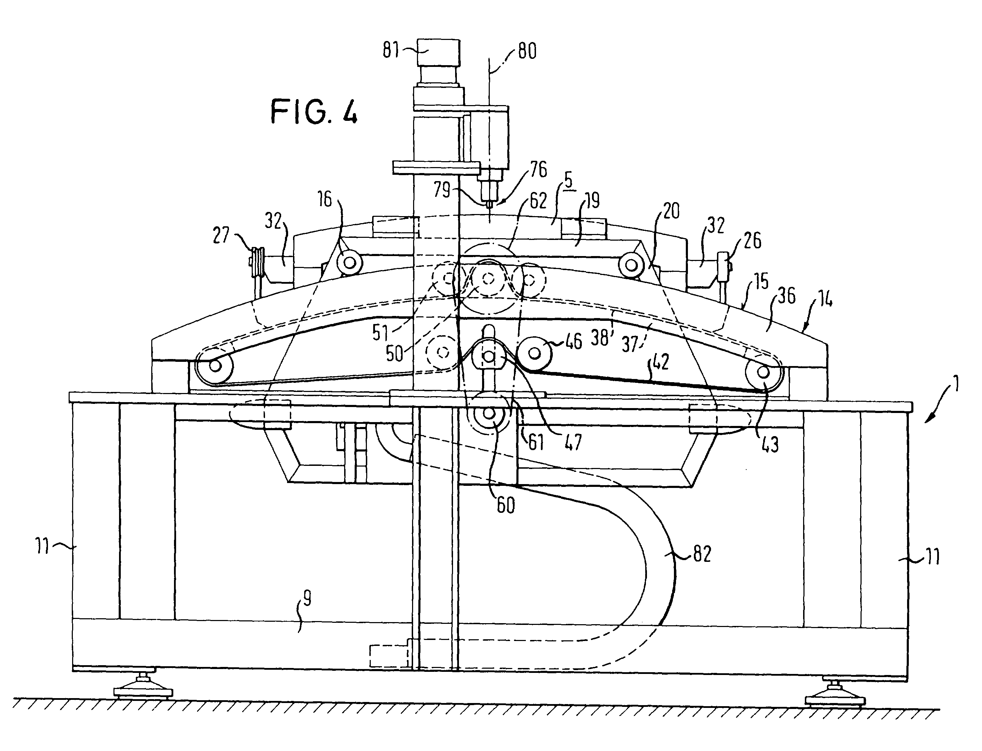

Die Konsolen 14, 23 bestehen jeweils aus einer inneren, vertikal stehenden Halteplatte 33, die sich über einen Großteil der Länge der jeweiligen Streben 12, 18 erstreckt und an diesen beispielsweise mit einer Schweißnaht befestigt ist. An den seitlichen Enden der Halteplatte 33 sind nach außen vorstehende Abstandsbacken 34 angeordnet. An den Abstandsbacken 34 einer Halteplatte 33 ist jeweils ein Bogenelement 35 lösbar befestigt. Das Bogenelement 35 besteht aus einer vertikal stehenden Lagerplatte 36, die jeweils eine der bogenförmigen Oberkanten 15, 25 aufweist, und eine an der Lagerplatte 36 befestigten bogenförmigen Schiene 37, die an der zur Halteplatte 33 gerichteten Seite der Lagerplatte 36 angeordnet ist (Fig. 3, Fig. 4). Die bogenförmige Schiene 37 bildet mit ihrer Oberfläche eine parallel zur jeweiligen bogenförmigen Oberkante 15, 25 ausgebildete Laufbahn 38. Das heißt, daß die Laufbahnen 38 die gleiche Bogenform wie die entsprechenden Oberkanten 15, 25 aufweisen, so daß die Laufbahnen mit konstantem Abstand zu den jeweiligen Oberkanten 15, 25 angeordnet sind. Ein Zahnriemen 40 liegt mit seinem oberen Trum 41 auf der Laufbahn 38 auf und ist mit seinem unteren Trum 42 unterhalb der bogenförmigen Schiene 37 angeordnet. An den Endbereichen der bogenförmigen Schiene 37 sind an der Halteplatte 33 Umlenkrollen 43 vorgesehen, die als Zahnräder ausgebildet sind, und um die der Zahnriemen 40 geführt wird. Im Bereich der Längsmitte der Halteplatten 33 ist jeweils eine Spanneinrichtung 45 vorgesehen, die aus zwei seitlich voneinander beabstandeten, auf gleicher Höhe angeordneten Spannrollen 46 und einem nicht drehbar gelagerten, höhenverstellbaren Fixierbacken 47 besteht, der zwischen den Spannrollen 46 angeordnet ist. Die Spannrollen 46 drücken von oben und der Fixierbacken 47 von unten gegen den unteren Trum 42 des Zahnriemens 40, so daß dieser durch eine Höhenverstellung des Fixierbackens 47 sowohl gespannt als auch durch den Reibkontakt an dem nicht drehbar gelagerten Fixierbacken 47 lagefixiert ist. Der gespannte Zahnriemen 40 liegt hierdurch mit seinem oberen Trum 41 flächig und unverrutschbar auf der Laufbahn 38 der bogenförmigen Schiene 37 auf.

An den Hängerahmenquerstreben 18 als auch an den Tischrahmenlängsstreben 28 ist längsmittig jeweils ein Lagerblock 49 für eine mit dem oberen Trum 41 des Zahnriemens 40 in Eingriff stehende Antriebsrolle 50 und zwei seitlich neben der Antriebsrolle 50 auf gleicher Höhe angeordnete Spannrollen 51 befestigt. Die Antriebsrollen 50 sind als Zahnrad ausgebildet, die mit der gezahnten Unterseite des oberen Trums 41 der Zahnriemen 40 in Eingriff stehen und die Spannrollen 51 sind an ihrer Mantelfläche glatt ausgebildet, da sie von oben auf die glatte Seite des oberen Trums 41 der Zahnriemen 40 drücken und so die Zahnriemen 40 um die Antriebsrolle 50 spannen.

Die Lagerblöcke 49 sind jeweils unterhalb der jeweiligen Streben 18, 28 angeordnet, so daß sich die Antriebsrollen 50 und die Spannrollen 51 ein wenig oberhalb der Laufbahnen 38 der jeweiligen bogenförmigen Schienen 37 befinden.

Werden die mit dem Zahnriemen 40 in Eingriff stehenden Antriebsrollen 50 des Hängerahmens 3 bzw. des Tischrahmens 4 gedreht, so wird der Hängerahmen 3 bzw. der Tischrahmen 4 entlang der bogenförmigen Oberkante 15 bzw. 25 bewegt. Die Antriebsrollen 50 des Hängerahmens 3 bzw. des Tischrahmens 4 werden jeweils von einem Elektromotor 53, 54 angetrieben.

Der Elektromotor 53 des Hängerahmens 3 ist an einer Hängerahmentragstrebe 55 befestigt, die parallel und mit etwas Abstand zu einer der Hängerahmenquerstreben 19 angeordnet ist (Fig. 2). Längsmittig lagert in der Hängerahmentragstrebe 55 eine Welle 56, die parallel zu und auf gleicher Höhe mit den Hängerahmenlängsstreben 18 angeordnet ist und sich über die gesamte Länge des Hängerahmens 3 erstreckt. Auf der Welle 56 sitzt drehfest ein großes Zahnrad 57, das von dem Elektromotor 53, der ein kleines Zahnrad 58 aufweist, mittels eines Zahnriemens 59 angetrieben wird. Endseitig sitzen auf der Welle 56 jeweils ein kleines Zahnrad 60, die über Zahnriemen 61 jeweils ein großes Zahnrad 62 antreiben, wobei die großen Zahnräder 62 jeweils an einer kurzen in den Lagerblöcken 49 der Hängerahmen 3 gelagerten horizontalen Welle 63 befestigt sind, auf der auch die mit dem Zahnriemen 40 in Eingriff stehenden Antriebsrollen 50 sitzen. Durch die Welle 56 wird sichergestellt, daß die Antriebsrollen 50 synchron angetrieben werden, so daß ein Verkanten des Hängerahmens 3 zwischen den beiden ersten Konsolen 14 sicher verhindert wird.

Der Elektromotor 54 des Tischrahmens 4 ist an einem Halteblech 65 befestigt, das an einer Tischrahmenquerstrebe 29 und einem Tischrahmenquerträger 66 angebracht ist. Der Tischrahmenquerträger 66 ist parallel zu den Tischrahmenquerstreben 29 angeordnet. Der Elektromotor 54 weist ein kleines Zahnrad 67 auf und überträgt mit einem Zahnriemen 68 seine Drehbewegung auf eine Untersetzungsstufe, die aus einem auf einer gemeinsamen Welle (nicht dargestellt) sitzenden großen Zahnrad 69 und einem kleinen Zahnrad besteht. Von dieser Untersetzungsstufe wird die Drehbewegung mittels eines Zahnriemens 70 auf ein großes Zahnrad 71 übertragen, das auf einer Welle 72 sitzt. Die Welle 72 erstreckt sich über die gesamte Breite des Tischrahmens 4, wobei an den Enden der Welle 72 die Antriebsrollen 50 befestigt sind, die von der Welle 72 somit synchron angetrieben werden. Die Welle 72 ist in zwei Lagerbuchsen 73 gelagert, die in die Tischrahmenlängsstreben 28 integriert sind.

Der Tischrahmen 4 kann somit durch die vom Motor 54 ausgeübten Drehbewegungen entlang der Oberkanten 25 der zweiten Konsolen 23 verfahren werden.

Die gewölbte Schneidplatte 5 ist auf dem Tischrahmen 4 lösbar befestigt, wobei die Schneidplatte 5 den durch die Tischrahmenlängsstreben 28 und den Tischrahmenquerstreben 29 aufgespannten Bereich abdeckt. In der Mitte der Schneidplatte 5 ist ein Loch 74 vorgesehen, in dem der Saugkopf 31 sitzt.

Oberhalb der Schneidplatte 5, auf die eine zu bearbeitende, konvex gewölbte Glaskalotte passend auflegbar ist, ist ein ortsfester Schneidkopfhalter 75 mit einem Schneidelement 76 vorgesehen. Der Schneidkopfhalter 75 ist an einer sich über den gesamten Schneidtisch 1 erstreckenden Traverse 77 befestigt. Die Traverse 77 stützt sich mit ihren Enden an jeweils einem vertikalen Stützpfeiler 78 an einem der Tragpfosten 13 ab.

Das Schneidelement 76 ist vorzugsweise ein Schneidrad 79, das um eine vertikale Achse 80 drehbar gelagert ist. Die Drehstellung des Schneidrades 79 wird mittels eines Servomotors 81 so eingestellt, daß das Schneidrad 79 beim Schneidvorgang immer entlang der Schnittlinie abrollt und nicht schräg über die Glaskalotte schabt.

Die Stromversorgung des Hängerahmens 3 erfolgt durch ein erstes elastisches Gliederband 82, das mit einem Ende am Bodenrahmen 6 des Maschinengestells 2 und mit dem anderen Ende am Hängerahmen 3 befestigt ist. Die Stromversorgung des Tischrahmens 4 wird durch eines zweites elastisches Gliederband 83 vom Hängerahmen 3 zum Tischrahmen 4 weitergeführt.

Um Längenausdehnungen aufgrund von Temperaturänderungen ausgleichen zu können, liegt der Hängerahmen 3 bzw. der Tischrahmen 4 nur auf einer der ersten bzw. nur auf einer der zweiten Konsolen 14, 23 mit am Umfang gerillten Führungsrollen 17 bzw. 27 auf. Auf den entsprechend anderen Konsolen 14, 23 liegen die Rahmen 3, 4 mit am Umfang keiszylindrisch ausgebildeten Laufrollen 16, 26 auf, die bei entsprechenden Längenänderungen auf den Konsolen 14, 23 verrutschen können.

Der Hängerahmen 3 kann auf den ersten Konsolen 14 in der durch die als bogenförmige Führungsbahn dienenden Oberkanten 15 aufgespannten Fläche in einer Art Pendelbewegung hin- und herbewegt werden. Ebenso kann der Tischrahmen 4 auf den zweiten Konsolen 23 in der durch die als bogenförmige Führungsbahn dienenden Oberkanten 24 aufgespannten Fläche in einer Art Pendelbewegung hin- und herbewegt werden. Die Überlagerung dieser beiden Bewegungen ermöglicht eine Bewegung der Schneidplatte 5 im Raum entlang einer der Oberfläche der Schneidplatte 5 entsprechend gewölbten Fläche. Die Lagerplatten 36 mit den bogenförmigen Schienen 37 der ersten Konsolen 14 bzw. der zweiten Konsolen 23 sind paarweise mit derselben Bogenform ausgebildet und an der Kalottenschneidmaschine austauschbar befestigt.

Die Bogenformen der Oberkanten 15, 25 der Konsolen 14 bzw. 23 entsprechen den Bogenformen der Schneidplatte 5 an mittigen, durch das Loch 70 verlaufenden Schnittflächen, die jeweils parallel zu den entsprechenden Konsolen 14 bzw. 23 ausgerichtet sind. Hierdurch wird gewährleistet, daß die sphärische Schneidplatte 5 bei einer Bewegung einer der beiden Rahmen 3, 4 entlang bzw. in der durch die Oberfläche der Schneidplatte 5 festgelegten gewölbten Oberfläche verfahren wird. Dies bedeutet, daß ein einmal durch die Schneidplatte 5 vertikal ausgerichteter Schneidkopfhalter 75 bzw. ein vertikal ausgerichtetes Schneidrad 79 bei einer Bewegung der Schneidplatte 5 vertikal zu dieser Schneidplatte 5 ausgerichtet verbleibt und keinen Höhenunterschied abfährt. Das heißt, daß der erfindungsgemäße Schneidtisch 1 die Wölbung der Glaskalotte interpoliert.

Mit einer solchen Kalottenschneidmaschine können nicht nur Glaskalotten mit der Form eines Kugelsegments sondern auch Glaskalotten mit der Form eines Segments eines beliebigen Rotationskörpers unter Aufrechterhaltung des vertikal ausgerichteten Schneidrades 79 geschnitten werden. Bei einer Kalottenschneidmaschine für Glaskalotten mit der Form eines Rotationskörpersegments weist zumindest die Bogenform der Oberkanten 15 der ersten Konsolen 14 oder die Bogenform der Oberkanten 15 der zweiten Konsolen 23 eine Kreisbogenform auf. Durch die Mittelpunkte dieser beiden Kreisbogenformen erstreckt sich die Rotationsachse des Rotationskörpersegments, so daß der entsprechende Rahmen 3, 4 um diese Rotationsachse geschwenkt wird. Die Oberkanten 15, 25 der Konsolen 14, 23, die nicht kreisbogenförmig ausgebildet sind, weisen die Form einer Mantellinie auf, die am Rotationskörper in derselben Ebene, wie die Rotationsachse liegt und durch deren Drehung um die Rotationsachse der gesamte Rotationskörper dargestellt wird. So können diese Oberkanten beispielsweise die Form eines Bogenabschnittes einer Ellipse aufweisen, wenn die Glaskalotte die Form eines Segments eines Rotationsellipsoids hat. Eine Glaskalotte mit der Form eines Kugelsegments ist ein Spezialfall eines Rotationskörpers, nämlich der bei dem die den Rotationskörper erzeugende Mantellinie die Form eines Halbkreises hat, so daß durch die Drehung der Mantellinie um die Rotationsachse eine Kugel entsteht. Bei Glaskalotten mit der Form eines Kugelsegmentes sind somit alle Oberkanten 15, 25 der Konsolen 14, 23 in der Form von gleichen Kreisbogensegmenten ausgebildet.

Abweichung von einer exakten Übereinstimmung zwischen den Bogenformen der Konsolen 14 bzw. 23 und den mittigen Wölbungen der Schneidplatte 5 sind bei der Bearbeitung von asphärischen Glaskalotten zweckmäßig, die beispielsweise am Rand stärker gewölbt sind. Bei derartigen Glaskalotten wird nur die Schneidplatte 5 zur passenden Aufnahme der Glaskalotten exakt an die Glaskalotte angepaßt und die die Rahmen 3, 4 führenden Konsolen bzw. Führungen 14, 23 weisen eine Bogenform auf, die in der oben dargestellten Weise dem nicht asphärischen Bereich entspricht.

Die Abweichungen sollten jedoch gering sein und in den Randbereich der Schneidplatte 5 gelegt werden, um die durch die senkrechte Ausrichtung des Schneidrades 79 erzielten Vorteile weitgehendst zu erhalten.

Die Bewegung der Rahmen 3, 4 und somit der Schneidplatte 5 und des Schneidrades 79 werden von einer elektronischen Steuereinrichtung gesteuert.

Wird eine Glaskalotte auf der Schneidplatte 2 aufgelegt, so wird die Schneidplatte 5 von der Steuereinrichtung zu Beginn des Schneidvorgangs so verfahren, daß die Glaskalotte mit einer Schnittlinie eines auszuschneidenden Glasteils unter dem Schneidrad 75 zu liegen kommt. Das Schneidrad 75 wird in seiner Drehstellung parallel zur Schnittlinie ausgerichtet und dann auf die Glaskalotte abgesenkt. Der Druck, mit dem das Schneidrad 75 auf die Glaskalotte aufliegt, wird auf einen für einen Schneiddruck geeigneten Wert eingestellt. Danach wird der Schneidvorgang durch Bewegen der Schneidplatte 5 ausgeführt, wobei beim Abfahren von runden bzw. gekrümmten Schnittlinienbereichen das Schneidrad 79 entsprechend gedreht wird, so daß es immer in Richtung der Schnittlinie rollt und nicht schräg über die Glaskalotte rutscht. Vorzugsweise wird beim Abfahren der runden Schnittlinienbereiche die Schnittgeschwindigkeit abgesenkt, so daß die runden Schnittlinienbereiche mit derselben Qualität wie gerade Schnittlinienbereiche auf die Glaskalotte eingebracht werden.

Auf die Glaskalotte können mit der erfindungsgemäßen Kalottenschneidmaschine auch Ecken geschnitten werden, indem beim Erreichen der Ecke die Bewegung der Schneidplatte 5 gestoppt, das Schneidrad 79 angehoben, entsprechend gedreht und wieder abgesenkt wird und die Bewegung der Schneidplatte 5 in die neue Richtung fortgesetzt wird.

Mit der erfindungsgemäßen Kalottenschneidmaschine können auch Freischnitte zwischen einzelnen Formschnitten ausgeführt werden, da die Form und der Verlauf der Schnittlinien frei programmiert werden können. Beim Brechen der Glasteile können dann die Bereiche zwischen den Glasteilen bereichsweise entfernt werden.

Die gesamten Schneidvorgänge werden vollautomatisch ausgeführt, so daß die Glaskalotten nur auf der Schneidplatte für den Schneidvorgang aufgelegt und ausgerichtet werden und nach dem Schneidvorgang abgenommen werden müssen.

Die erfindungsgemäße Kalottenschneidmaschine eignet sich auch wesentlich besser als herkömmliche Kalottenschneidmaschinen zum Schneiden von asphärischen Gläsern, da die während des Schneidvorgangs im asphärischen Bereich auftretenden Höhenunterschiede und Neigungswinkel des Schneidrades nur sehr gering sind.

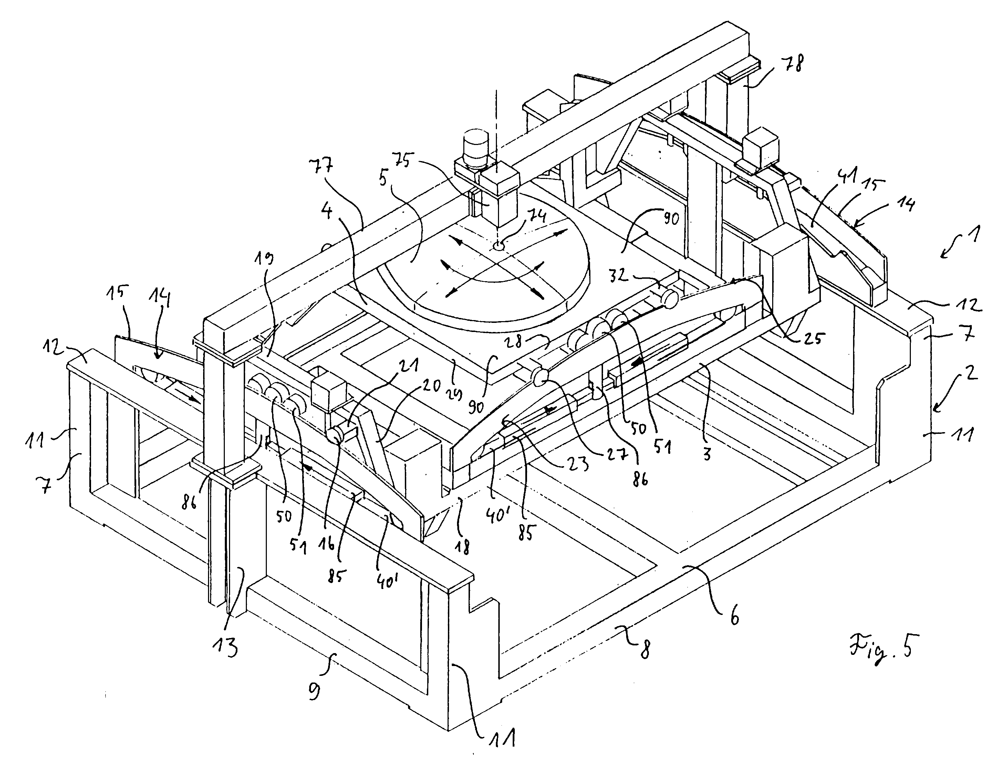

In den Figuren 5 bis 7 ist ein weiteres Ausführungsbeispiel der erfindungsgemäßen Kalottenschneidmaschine dargestellt. Diese Kalottenschneidmaschine weist in gleicher Weise wie das erste Ausführungsbeispiel einen Schneidtisch 1 auf, der aus einem Maschinengestell 2, einem Hängerahmen 3, einem Tischrahmen 4 und einer Schneidplatte 5 besteht, die auf dem Tischrahmen 4 aufliegt.

Das in den Figuren 5 bis 7 dargestellte zweite Ausführungsbeispiel der Kalottenschneidmaschine unterscheidet sich von dem ersten Ausführungsbeispiel durch eine andere Ausbildung der Zahnriemen 40' und des entsprechenden Spannmechanismuses und durch das Vorsehen einer drehbaren Schneidplatte 5. Im übrigen sind die beiden Ausführungsbeispiele im wesentlichen gleich ausgebildet, so daß gleiche Teile mit gleichen Bezugszeichen versehen sind.

Die Zahnriemen 40' sind nicht als Endlosriemen ausgebildet, sondern weisen jeweils zwei Enden auf, die jeweils an einem Spannkörper 85 befestigt sind. Die Spannkörper 85 sind parallel zu den oberen Maschinenquerstreben 12 des Maschinengestells 2 bzw. parallel zu und auf den Hängerahmenlängsstreben 22 des Hängerahmens 3 angeordnet. Zwischen den Maschinengestellquerstreben 12 und den Konsolen 14 bzw. zwischen den Hängerahmenlängsstreben 22 und den Konsolen 23 ist jeweils im Bereich der Längsmitte der Konsolen 14, 23 ein vertikal ausgebildeter Pfeiler 86 angeordnet. Die Spannkörper 85 sind jeweils mit einem Ende an einem der Pfeiler 86 eingehängt, wobei am gegenüberliegenden Ende der Spannkörper 85 die Riemen 40' befestigt sind. Zum Spannen der Riemen 40' können die Spannkörper 85 in Richtung (Pfeil 89) zu den Pfeilern 86 verschoben und fixiert werden, wobei die Riemen 40' wie beim ersten Ausführungsbeispiel um jeweils zwei Umlenkrollen 43, zwei Spannrollen 51 und eine Antriebsrolle 50 geführt und gespannt werden.

Das Vorsehen eines Riemens 40' mit zwei Enden, die mittels der Spannkörper 85 gespannt und fixiert werden können, erlaubt ein einfaches und schnelles Einführen bzw. Austauschen der Riemen 40' an der vollständig montierten Kalottenschneidmaschine. Im übrigen ist die Anwendung und die Funktion des Riemens 40' bzw. der Antriebsrollen 50 und der Konsolen 14, 23 die gleiche wie beim ersten Ausführungsbeispiel der Kalottenschneidmaschine.

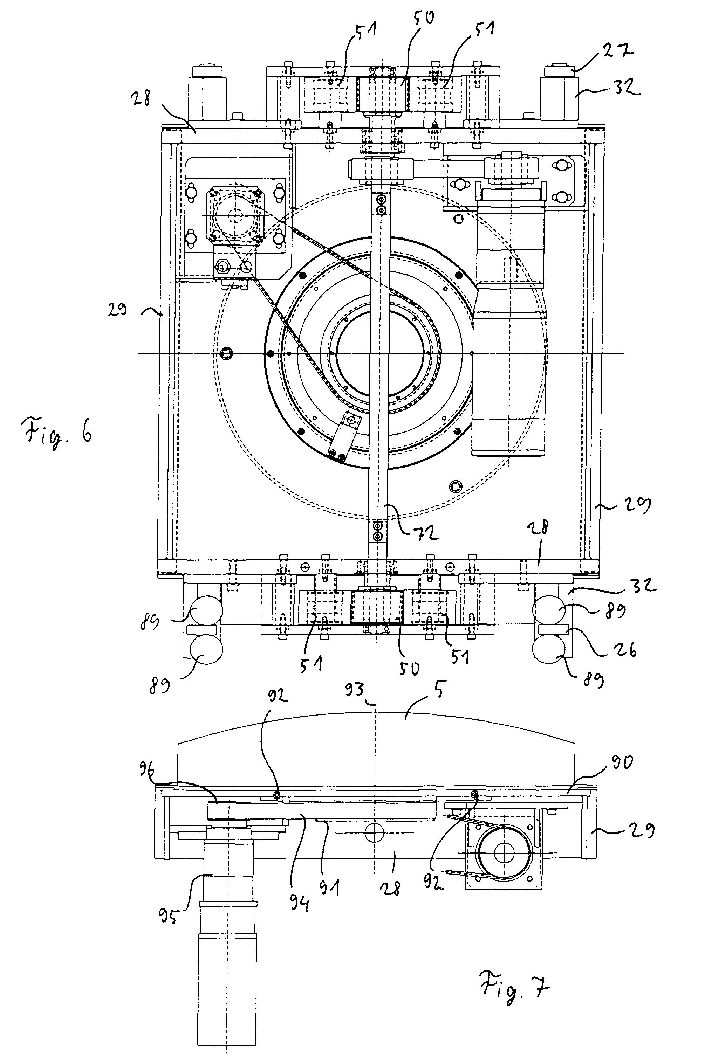

Der Tischrahmen 4 besteht wiederum aus zwei Tischrahmenlängsstreben 28 und zwei Tischrahmenquerstreben 29, die in der Form eines Rechtecks angeordnet sind (Fig. 6). Die Laufrollen 26 sind an horizontalen Lagerzapfen 32 gelagert, die an den Tischrahmenlängsstreben 28 befestigt sind. An einer Seite des Tischrahmens 4 sind an der Unterseite der Lagerzapfen 32 jeweils Führungsrollen 89 paarweise angeordnet, die eine Lagerplatte 36 einer der Konsolen 23 im Bereich ihrer bogenförmigen Oberkante 25 umgreifen, so daß die seitliche Anordnung des Tischrahmens 4 eindeutig festgelegt ist.

Der Tischrahmen 4 weist an seiner Oberseite eine rechteckige Platte 90 auf, die fest mit dem Tischrahmenlängsstreben 28 und den Tischrahmenquerstreben 29 verbunden ist. Die Platte 90 ist mittig mit einem Durchgangsloch versehen, das von einer Welle durchgriffen wird. Diese Welle verbindet die Schneidplatte 5, die auf der Platte 90 aufliegt, mit einem horizontal unterhalb der Platte 90 angeordneten Schneidplattenzahnrad 91. Die Schneidplatte 5 ist in der Draufsicht eine kreisförmige Scheibe mit einer kalottenförmigen bzw. kugelsegmentförmigen Oberseite. Die Unterseite der Schneidplatte 5 ist ebenflächig und liegt über ein Kugellager 92 um eine mittige Achse 93 drehbar auf der Platte 90 auf. Das Schneidplattenzahnrad 91 ist über einen Zahnriemen 94 mit einem von einem Elektromotor 95 angetriebenen Zahnrad 96 verbunden.

Der Elektromotor 95 ist in einem Eckbereich des Tischrahmens 4 angeordnet und befestigt. Die Schneidplatte 5 kann somit nicht nur in zwei zueinander senkrechten Richtungen verfahren, sondern auch um seine mittig auf der Schneidplatte 5 angeordneten Achse 93 gedreht werden, wobei die Achse 93 senkrecht zum Tischrahmen 4 angeordnet ist.

Ferner sind am Tischrahmen 4 in ähnlicher Anordnung wie beim ersten Ausführungsbeispiel 2 auf einer Welle 72 sitzende Antriebsrollen 50 vorgesehen, die über einen Zahnriemen 70 von einem weiteren Elektromotor 54 angetrieben werden. Seitlich neben den Antriebsrollen 50 sind jeweils zwei Spannrollen 51 angeordnet. Die Schneidplatte 5 kann mittig mit einem Saugkopf 31 versehen sein, um eine zu bearbeitende kalottenförmige Glasplatte fixieren zu können.

## Patentansprüche

1. Kalottenschneidmaschine zum Schneiden von Glaskalotten mit
einem Schneidkopfhalter (75) mit
einem ortsfesten Schneidelement (76),
einem Schneidtisch (1) mit einer gewölbten Schneidplatte (5) zur Aufnahme einer Glaskalotte, wobei die Schneidplatte (5) derart gelagert und durch eine Antriebseinheit antreibbar ist, daß sie entlang einer durch ihre Oberläche festgelegten gewölbten Fläche in zwei zueinander senkrechten Richtungen während des Schneidens unter dem Schneidelement hin und her bewegbar ist, und
einer Steuereinrichtung, die die Antriebseinheit so steuert, daß die Schneidplatte (5) unter dem ortsfesten Schneidkopfhalter (75) entlang einer vorbestimmten Schnittlinie bewegt wird.

2. Kalottenschneidmaschine nach Anspruch 1,
dadurch **gekennzeichnet,**
daß das Schneidelement (76) ein Schneidrad (79) ist und um eine vertikale Achse (80) drehbar im Schneidkopfhalter (71) gelagert ist und dessen Drehstellung von der Steuereinrichtung gesteuert wird.

3. Kalottenschneidmaschine nach Anspruch 1 und/oder Anspruch 2,
dadurch **gekennzeichnet,**
daß die Schneidplatte (5) um eine vertikale Achse (93) drehbar gelagert ist und deren Drehstellung von der Steuereinrichtung gesteuert wird.

4. Kalottenschneidmaschine nach Anspruch 2 und/oder 3,
dadurch **gekennzeichnet**,
daß der Schneidkopfhalter (75) einen Servomotor (81) zum Einstellen der Drehstellung des Schneidrades (79) aufweist.

5. Kalottenschneidmaschine nach einem oder mehreren der Ansprüche 1 bis 4,
dadurch **gekennzeichnet,**
daß der Schneidtisch (1) ein Maschinengestell (2) aufweist, an dem zwei erste Konsolen (14) zur Lagerung eines Hängerahmens (3) befestigt sind, die parallel zueinander an Randbereichen des Schneidtisches (1) angeordnet sind, wobei an den ersten Konsolen (14) eine bogenförmige Oberkante (15) als Führungsbahn ausgebildet ist, auf der der Hängerahmen (3) mit Gleit- bzw. Führungsrollen (16,17) verrollbar lagert.

6. Kalottenschneidmaschine nach Anspruch 5,
dadurch **gekennzeichnet,**
daß die Oberkante (15) konvex gewölbt ist.

7. Kalottenschneidmaschine nach Anspruch 5 und/oder Anspruch 6,
dadurch **gekennzeichnet,**
daß die Oberkante (15) kreisbogenförmig geformt ist, wobei vorzugsweise der höchste Punkt der Oberkante (15) in der Längsmitte der Konsole (14) angeordnet ist.

8. Kalottenschneidmaschine nach einem oder mehreren der Ansprüche 5 bis 7,
dadurch **gekennzeichnet,**
daß an den beiden Konsolen (14) jeweils ein Riemen (40,40') vorgesehen ist, der ortsfest angeordnet ist und ein oberer Trum (41) davon etwa parallel zur Oberkante (15) auf einer Laufbahn (38) einer bogenförmigen Schiene (37) geführt ist, wobei der Hängerahmen (3) mittels zweier Antriebsrollen (50) mit jeweils einem der beiden Riemen im Bereich seines oberen Trums in Eingriff steht, so daß duch eine Drehbewegung der Antriebsrollen (50) der Hängerahmen (3) entlang der Oberkante (15) bewegt wird.

9. Kalottenschneidmaschine nach Anspruch 8,
dadurch **gekennzeichnet,**
daß der Riemen (40) als endlos geführter Riemen ausgebildet ist.

10. Kalottenschneidmaschine nach Anspruch 8,
dadurch **gekennzeichnet,**
daß der Riemen (40') zwei Enden aufweist, die jeweils an einem Spannkörper (85) befestigt sind, die parallel zu den oberen Maschinenquerstreben (12) des Maschinengestells (2) bzw. parallel zu und auf den Hängerahmenlängsstreben (22) des Hängerahmens (3) verschiebbar und fixierbar angeordnet sind.

11. Kalottenschneidmaschine nach einem oder mehreren der Ansprüche 8 bis 11,
dadurch **gekennzeichnet,**
daß die beiden Antriebsrollen (50) von einem Elektromotor (53) angetrieben werden, der mittels einer Welle (56), die sich über den gesamten Bereich zwischen den beiden Konsolen (14) erstreckt, eine Drehbewegung überträgt, so daß die beiden Antriebsrollen (50) synchron angetrieben werden.

12. Kalottenschneidmaschine nach einem oder mehreren der Ansprüche 5 bis 11,
dadurch **gekennzeichnet,**
daß der Hängerahmen (3) aus einer Rahmenkonstruktion mit zwei Hängerahmenlängsstreben (18) und zwei Hängerahmenquerstreben (19) besteht, wobei die Hängerahmenquerstreben (19) etwas kürzer als der Abstand zwischen den Hängerahmenlängsstreben (18) und oberhalb der Hängerahmenlängsstreben (18) angeordnet sind, und die Enden der Hängerahmenlängsstreben (18) mit den Enden der Hängerahmenquerstreben (19) jeweils über kurze, schräg verlaufende Verbindungsstreben (20) verbunden sind.

13. Kalottenschneidmaschine nach einem oder mehreren der Ansprüche 5 bis 12,
dadurch **gekennzeichnet,**
daß am Hängerahmen (3) zwei zweite Konsolen (23) zur Lagerung eines Tischrahmens (4) vorgesehen sind, der die Schneidplatte (5) trägt, wobei die zweiten Konsolen (23) senkrecht zu den von den ersten Konsolen (14) festgelegten Ebenen angeordnet sind und an den zweiten Konsolen (23) jeweils eine als Führungsbahn dienende gewölbte Oberkante (25) ausgebildet ist, auf die der Tischrahmen (4) mit Lauf- bzw. Führungsrollen (26, 27) lagert.

14. Kalottenschneidmaschine nach Anspruch 13,
dadurch **gekennzeichnet**,
daß die Oberkanten (25) der zweiten Konsolen (23) konvex gewölbt sind.

15. Kalottenschneidmaschine nach Anspruch 13 und/oder 14,
dadurch **gekennzeichnet**,
daß die Wölbungen der Oberkanten (15, 25) der Konsolen (14, 23) den Wölbungen der Schneidplatte (5) an mittigen, sich durch das Zentrum der Schneidplatte (5) verlaufenden Schnittflächen entsprechen, die jeweils parallel zu den entsprechenden Konsolen (14 bzw. 23) ausgerichtet sind, wobei zumindest die Wölbung der Oberkanten (15) der ersten Konsolen (14) oder die Wölbung der Oberkante (25) der zweiten Konsolen (23) kreisbogenförmig ist.

16. Kalottenschneidmaschine nach einem oder mehreren der Ansprüche 13 bis 15,
dadurch **gekennzeichnet**,
daß die Oberkante (25) der zweiten Konsolen (23) die Form eines Bogenabschnittes einer Ellipse aufweist.

17. Kalottenschneidmaschine nach einem oder mehreren der Ansprüche 13 bis 16,
dadurch **gekennzeichnet**,
daß die Oberkante (25) der zweiten Konsolen (23) kreisbogenförmig geformt ist, wobei der höchste Punkt der Oberkante (25) in der Längsmitte der Konsole (23) angeordnet ist.

18. Kalottenschneidmaschine nach einem oder mehreren der Ansprüche 13 bis 17,
dadurch **gekennzeichnet**,
daß an den beiden zweiten Konsolen (23) jeweils ein endlos geführter Riemen (40) vorgesehen ist, der ortsfest angeordnet ist und mit einem oberen Trum (41) etwa parallel zur Oberkante (25) auf einer Laufbahn (38) einer bogenförmigen Schiene (37) der zweiten Konsolen (23) verläuft, wobei der Tischrahmen (4) mittels zweier Antriebsrollen (50) mit jeweils einem der beiden Riemen (40) im Bereich der oberen Trume (41) in Eingriff steht, so daß durch eine Drehbewegung der Antriebsrollen (40) der Tischrahmen (4) entlang der Oberkanten (25) bewegt wird.

19. Kalottenschneidmaschine nach Anspruch 18,
dadurch **gekennzeichnet**,
daß die beiden Antriebsrollen (50) von einem Elektromotor (54) angetrieben werden, der mittels einer Welle (72), die sich über den gesamten Bereich zwischen den beiden zweiten Konsolen (23) erstreckt, eine Drehbewegung überträgt, so daß die beiden Antriebsrollen (50) synchron angetrieben werden.

20. Kalottenschneidmaschine nach Anspruch 19,
dadurch **gekennzeichnet**,
daß der Tischrahmen (4) aus einem rechteckigen Rahmen besteht, der durch zwei Tischrahmenlängsstreben (28) und zwei Tischrahmenquerstreben (29) ausgebildet ist, wobei die Welle in zwei in den Tischrahmenlängsstreben (28) integrierten Lagerbuchsen (73) gelagert ist.

21. Kalottenschneidmaschine nach einem oder mehreren der Ansprüche 13 bis 20,
dadurch **gekennzeichnet**,
daß im Zentrum des Tischrahmens (4) ein Saugkopf (31) angeordnet ist, mit dem über ein Loch (74) in der Schneidplatte (5) eine Glaskalotte angesaugt werden kann.

22. Verfahren zum Schneiden einer Glaskalotte insbesondere mit einer Kalottenschneidmaschine nach einem oder mehreren der Ansprüche 1 bis 21,
dadurch **gekennzeichnet**,
daß die Glaskalotte auf eine Schneidplatte aufgelegt wird, ein senkrecht zur Oberfläche der Glaskalotte ausgerichtetes Schneidelement an die Glaskalotte angelegt wird, und die Glaskalotte durch Bewegen der Schneidplatte unter dem Schneidelement derart verfahren wird, daß vorbestimmte Schnittlinien in die Glaskalotte eingebracht werden, wobei die Bewegung der Glaskalotte entlang einer durch ihre Oberlfläche festgelegten gewölbten Fläche geführt wird.

23. Verfahren nach Anspruch 22,
dadurch **gekennzeichnet,**
daß beim Schneiden von gekrümmten Schnittlinienbereichen ein als Schneidelement verwendetes Schneidrad entsprechend gedreht wird, so daß es immer in Richtung der Schnittlinie rollt.

24. Verfahren nach Anspruch 22 und/oder 23,
dadurch **gekennzeichnet,**
daß beim Schneiden von gekrümmten Schnittlinienbereichen die Schnittgeschwindigkeit im Vergleich zum Schneiden von geradlinigen Schnittlinienbereichen gesenkt wird.

25. Verfahren nach einem oder mehreren der Ansprüche 22 bis 24,
dadurch **gekennzeichnet,**
daß aus einer Glaskalotte in einem Arbeitsvorgang mehrere Formschnitte für jeweils ein auszuschneidendes Glasteil eingebracht werden, wobei bei diesem einen Arbeitsvorgang auch Freischnitte eingebracht werden.

## Claims

1. Machine for the cutting of cupped glass plates, having a cutting head holder (75) with
a fixed cutting element (76),
a cutting table ( I ) with a domed cutting plate (5) to receive a cupped glass plate, such that the cutting plate (5) is mounted and can be driven by a drive unit in such a manner that it can be moved to and fro along a curved surface determined by its own area in two mutually perpendicular directions under the cutting element during the cutting process, and
a control device which controls the drive unit in such a manner that the cutting plate (5) is moved under the fixed cutting head holder (75) along a predetermined line of cut.

2. Cutting machine for cupped plates according to Claim 1,
**characterised in that**
the cutting element (76) is a cutting wheel (79) and is mounted to rotate about a vertical axis (80) in the cutting head holder (71), and its rotation position is controlled by the control device.

3. Cutting machine for cupped plates according to Claims 1 and/or 2,
**characterised in that**
the cutting plate (5) is mounted so as to rotate about a vertical axis (93) and its rotation position is controlled by the control unit.

4. Cutting machine for cupped plates according to Claims 2 and/or 3,
**characterised in that**
the cutting head holder (75) comprises a servomotor (81) to adjust the rotation position of the cutting wheel (79).

5. Cutting machine for cupped plates according to one or more of Claims 1 to 4,
**characterised in that**
the cutting table (1) comprises a machine frame (2) to which are attached two first brackets (14) for the mounting of a hanging frame (3), the said brackets being arranged parallel to one another in edge areas of the cutting table (1), such that on the first brackets (14) are formed curved upper edges (15) serving as guide tracks over which the hanging frame (3) can be rolled on slide or guide rolls (16, 17).

6. Cutting machine for cupped plates according to Claim 5,
**characterised in that**
the upper edge (15) has a convex curvature.

7. Cutting machine for cupped plates according to Claims 5 and/or 6,
**characterised in that**
the upper edge (15) is shaped as a circular arc, such that the highest point of the upper edge (15) is preferably positioned half-way along the length of the brackets (14).

8. Cutting machine for cupped plates according to one or more of Claims 5 to 7,
**characterised in that**
on each of the brackets (14) is provided a belt (40, 40') arranged in a fixed position, an upper stretch (41) of which moves on a track (38) of a curved rail (37) approximately parallel to the upper edge (15), such that the hanging frame (3) engages with one of the two belts in each case in the area of its upper stretch via two drive rolls (50), so that when the drive rolls (50) rotate, the hanging frame (3) moves along the upper edges (15).

9. Cutting machine for cupped plates according to Claim 8,
**characterised in that**
the belt (40) is formed as an endless belt.

10. Cutting machine for cupped plates according to Claim 9,
**characterised in that**
the belt (40') has two ends, each attached to a clamping element (85), the said clamping elements being arranged so that they can move and be fixed parallel to the upper transverse strut (12) of the machine or parallel to and on the longitudinal strut (22) of the hanging frame (3).

11. Cutting machine for cupped plates according to one or more of Claims 8 to 11,
**characterised in that**
the two drive rolls (50) are driven by an electric motor (53) which transmits a rotary movement via a shaft (56) extending across the whole area between the two brackets (14), so that the two drive rolls (50) are driven synchronously.

12. Cutting machine for cupped plates according to one or more of Claims 5 to 11,
**characterised in that**
the hanging frame (3) consists of a frame structure with two longitudinal struts (18) and two transverse struts (19), such that the hanging frame's transverse struts (19) are somewhat shorter than the distance between the hanging frame's longitudinal struts (18) and are arranged higher than the said longitudinal struts (18), and the ends of the hanging frame's longitudinal struts (18) are connected to those of its transverse struts (19) in each case via short, oblique connecting struts (20).

13. Cutting machine for cupped plates according to one or more of Claims 5 to 12,
**characterised in that**
on the hanging frame (3) are provided two second brackets (23) for the mounting of a table frame (4) which carries the cutting plate (5), such that the second brackets (23) are arranged perpendicularly to the planes determined by the first brackets (14), and on each of the second brackets (23) there is a curved upper edge (25) which serves as a guide track on which the table frame (4) is mounted on running or guide rolls (26, 27).

14. Cutting machine for cupped plates according to Claim 13,
**characterised in that**
the upper edges (25) of the second brackets (23) have a convex curvature.

15. Cutting machine for cupped plates according to Claims 13 and/or 14,
**characterised in that**
the curvatures of the upper edges (15, 25) of the brackets (14, 23) correspond to the curvatures of the cutting plate (5) at the central cutting surfaces passing through the centre of the cutting plate (5), each being directed parallel to the corresponding brackets (14 or 23), such that the curvature at least of the upper edges (15) of the first brackets (14) or that of the upper edges (25) of the second brackets (23) is in the shape of a circular arc.

16. Cutting machine for cupped plates according to one or more of Claims 13 to 15,
**characterised in that**
the upper edges (25) of the second brackets (23) have the shape of a curved segment of an ellipse.

17. Cutting machine for cupped plates according to one or more of Claims 13 to 16,
**characterised in that**
the upper edges (25) of the second brackets (23) are shaped as a circular arc, with the highest point of the upper edges (25) positioned half-way along the length of the brackets (23).

18. Cutting machine for cupped plates according to one or more of Claims 13 to 17,
**characterised in that**
an endless belt (40) is provided on each of the two second brackets (23), the said belts being in fixed positions with an upper stretch (41) moving approximately parallel to the upper edges (25) on a track (38) of a curved rail (37) of the second brackets (23), such that the table frame (4) engages with one of the two belts (40) in each case in the area of the upper stretches (41) via two drive rolls (50), so that when the drive rolls (50) rotate, the table frame (4) moves along the upper edges (25).

19. Cutting machine for cupped plates according to Claim 18,
**characterised in that**
the two drive rolls (50) are driven by an electric motor (54) which transmits a rotary movement via a shaft (72) extending across the whole area between the two brackets (23), so that the two drive rolls (50) are driven synchronously.

20. Cutting machine for cupped plates according to Claim 19,
**characterised in that**
the table frame (4) consists of a rectangular frame formed of two longitudinal struts (28) and two transverse struts (29), and the shaft is mounted in two bearing bushes (73) integrated into the table frame's longitudinal struts (28).

21. Cutting machine for cupped plates according to one or more of Claims 13 to 20,
**characterised in that**
at the centre of the table frame (4) is arranged a suction head (31) by means of which a glass dish can be sucked on via a hole (74) in the cutting plate (5).

22. Process for cutting a cupped glass plate in particular by means of a cupped plate cutting machine according to one or more of Claims 1 to 21,
**characterised in that**
the cupped glass plate is placed on a cutting plate, a cutting element directed perpendicularly to the surface of the glass plate is placed against the glass plate, and the cupped glass plate is moved about by moving the cutting plate under the cutting element in such a manner that predetermined lines of cut are made in the cupped glass plate and its movement takes place along a curved surface defined by its own area.

23. Process according to Claim 22,
**characterised in that**
for the cutting of curved lines of cut a cutting wheel used as the cutting element is rotated correspondingly, so that it always rolls in the direction of the line-of-cut.

24. Process according to Claims 22 and/or 23,
**characterised in that**
for the cutting of curved lines of cut the cutting speed is reduced compared with the cutting of rectilinear lines of cut.

25. Process according to one or more of Claims 22 to 24,
**characterised in that**
from one cupped glass plate, several shaped cuts can be made in a single working stage, each for one glass article to be cut out, and in the said single working stage free cuts can also be made.

## Revendications

1. Machine à découper les calottes pour découper des calottes de verre, comprenant un support de tête de coupe (75) comprenant un élément de coupe fixe (76), une table de coupe (1) comprenant une plaque de coupe bombée (5) destinée à recevoir la calotte de verre, dans laquelle la plaque de coupe (5) est montée et peut être entraînée par une unité d'entraînement de manière qu'elle puisse être déplacée en va-et-vient dans deux directions mutuellement perpendiculaires pendant la coupe, sous l'élément de coupe, le long d'une surface bombée déterminée par sa surface supérieure, et un dispositif de commande qui commande l'unité d'entraînement de manière que la plaque de coupe (5) soit déplacée sous le support de tête de coupe fixe (75) le long d'une ligne de coupe prédéterminée.

2. Machine à découper les calottes selon la revendication 1, caractérisée en ce que l'élément de coupe (76) est une molette de coupe (79) et est montée dans le support de tête de coupe (71) de façon à pouvoir tourner autour d'un axe vertical (80), et dont la position de rotation est commandée par le dispositif de commande.

3. Machine à découper les calottes selon la revendication 1 et/ou la revendication 2, caractérisée en ce que la plaque de coupe (5) est montée pour pouvoir tourner autour d'un axe vertical (93) et dont la position de rotation est commandée par le dispositif de commande.

4. Machine à découper les calottes selon la revendication 2 et/ou 3, caractérisée en ce que le support de tête de coupe (75) présente un servomoteur (81) pour le réglage de la position de rotation de la molette de coupe (79).

5. Machine à découper les calottes selon une ou plusieurs des revendications 1 à 4, caractérisée en ce que la table de coupe (1) présente un bâti de machine (2) auquel sont fixées deux premières consoles (14) pour le montage d'un châssis suspendu (3), qui sont disposées parallèlement l'une à l'autre le long de régions marginales de la table de coupe (1), dans laquelle il est prévu, sur les premières consoles (14), un bord supérieur en forme d'arc (15) jouant le rôle de voie de guidage sur laquelle le châssis suspendu (3) est monté pour rouler à l'aide de galets de glissement ou de guidage (16, 17).

6. Machine à découper les calottes selon la revendication 5, caractérisée, en ce que le chant supérieur (15) est bombé avec une forme convexe.

7. Machine à découper les calottes selon la revendication 5 et/ou la revendication 6, caractérisée en ce que le chant supérieur (15) est formé en forme d'arc de cercle, le point le plus élevé du chant supérieur (15) étant de préférence disposé au milieu de la longueur de la console (14).

8. Machine à découper les calottes selon une ou plusieurs des revendications 5 à 7, caractérisée en ce qu'à chacune des deux consoles (14) est prévue une courroie (40, 40') qui est agencée fixe, et un brin supérieur (41) de cette courroie est guidé à peu près parallèlement au chant supérieur (15) sur une voie de roulement (38) d'un rail (37) en forme d'arc, le châssis suspendu (3) étant en prise au moyen de deux galets d'entraînement (50), pour chacun avec une des deux courroies dans la région de son brin supérieur, de sorte que, sous l'effet d'un mouvement de rotation des galets d'entraînement (50), le châssis suspendu (3) est mis en mouvement le long du chant supérieur (15).

9. Machine à découper les calottes selon la revendication 8, caractérisée en ce que la courroie (40) est constituée par une courroie guidée sans fin.

10. Machine à découper les calottes selon la revendication 8, caractérisée en ce que la courroie (40') présente deux extrémités qui sont fixées respectivement à des corps de tension (85) qui sont agencés parallèlement aux entretoises transversales de machine supérieures (12) du bâti (2) de la machine ou, respectivement, parallèlement aux entretoises longitudinales de châssis suspendu (22) du châssis suspendu (3) de façon à pouvoir être déplacées en translation et immobilisées.

11. Machine à découper les calottes selon une ou plusieurs des revendications 8 à 10, caractérisée en ce que les deux galets d'entraînement (50) sont entraînés par un moteur électrique (53) qui transmet un mouvement de rotation au moyen d'un arbre (56) qui s'étend sur toute la région comprise sur les deux consoles (14), de sorte que les deux galets d'entraînement (50) sont entraînés en synchronisme.

12. Machine à découper les calottes selon une ou plusieurs des revendications 5 à 11, caractérisée en ce que le châssis suspendu (3) est constitué par une construction de châssis comprenant deux entretoises longitudinales de châssis suspendu (18) et deux entretoises transversales de châssis suspendu (19), les entretoises transversales de châssis suspendu (19) étant un peu plus courtes que la distance entre les entretoises longitudinales de châssis suspendu (18) et étant disposées au-dessus des entretoises longitudinales de châssis suspendu (18), et les extrémités des entretoises longitudinales de châssis suspendu (18) étant réunies aux extrémités des entretoises transversales de châssis suspendu (19) chacune par l'intermédiaire d'entretoises de liaison courtes (20) s'étendant obliquement.

13. Machine à découper les calottes selon une ou plusieurs des revendications 5 à 12, caractérisée en ce que, sur le châssis suspendu (3), sont prévues deux deuxièmes consoles (23) pour le montage d'un châssis de table (4) qui porte la plaque de coupe (5), dans laquelle les deuxièmes consoles (23) sont disposées perpendiculairement aux plans définis par les premières consoles (14) et, sur chacune des deuxièmes consoles (23), est formé un chant supérieur bombé (25) servant de voie de guidage, sur lequel le châssis de table (4) est monté au moyen de galets de roulement et de guidage (26, 27).

14. Machine à découper les calottes selon la revendication 13, caractérisée en ce que les chants supérieurs (25) des deuxièmes consoles (23) sont bombés avec une forme convexe.

15. Machine à découper les calottes selon la revendication 13 et/ou 14, caractérisée en ce que les bombés des chants supérieurs (15, 25) des consoles (14, 23) correspondent aux bombés de la plaque de coupe (5) le long de surfaces de section médiane qui passent par le centre de la plaque de coupe (5) et qui sont orientées respectivement parallèlement aux consoles correspondantes (14, 23 respectivement), et dans laquelle au moins le bombé des chants supérieurs (15) des premières consoles (14) ou le bombé du chant supérieur (25) des deuxièmes consoles (23) est en forme d'arc de cercle.

16. Machine à découper les calottes selon une ou plusieurs des revendications 13 à 15, caractérisée en ce que le chant supérieur (25) des deuxièmes consoles (23) présente la forme d'un segment d'arc d'ellipse.

17. Machine à découper les calottes selon une ou plusieurs des revendications 13 à 16, caractérisée en ce que le chant supérieur (25) des deuxièmes consoles (23) est formé en forme d'arc de cercle, le point extrême supérieur du chant supérieur (25) étant disposé au milieu longitudinal de la console (23).

18. Machine à découper les calottes selon une ou plusieurs des revendications 13 à 17, caractérisée en ce que, sur chacune des deux deuxièmes consoles (23), est prévue une courroie (40) guidée sans fin, qui est disposée en position fixe et s'étend, par son brin supérieur (41) à peu près parallèlement au chant supérieur (25), sur une voie de circulation (38) d'un rail (37) en forme d'arc des deuxièmes consoles (23), dans laquelle le châssis de table (4) est en prise, au moyen de deux galets d'entraînement (50) respectivement avec l'une et l'autre des deux courroies (40), dans la région des brins supérieurs (41), de sorte que, sous l'effet d'un mouvement de rotation des galets d'entraînement (40), le châssis de table (4) se déplace le long des chants supérieurs (25).

19. Machine à découper les calottes selon la revendication 18, caractérisée en ce que les deux galets d'entraînement (50) sont entraînés par un moteur électrique (54) qui transmet un mouvement de rotation au moyen d'un arbre (72) qui s'étend sur toute la région comprise entre les deux deuxièmes consoles (23), de sorte que les deux galets d'entraînement (50) sont entraînés en synchronisme.

20. Machine à découper les calottes selon la revendication 19, caractérisée en ce que le châssis de table (4) est constitué par un châssis rectangulaire qui est formé de deux entretoises longitudinales de châssis de table (28) et de deux entretoises transversales de châssis de table (29), l'arbre étant tourillonné dans deux coussinets (73) intégrés dans les entretoises longitudinales de châssis de table (28).

21. Machine à découper les calottes selon une ou plusieurs des revendications 13 à 20, caractérisée en ce qu'au centre du châssis de table (4), est disposée une tête d'aspiration (31) au moyen de laquelle une calotte de verre peut être aspirée à travers un trou (74) ménagé dans la plaque de coupe (5).

22. Procédé pour découper une calotte de verre, en particulier au moyen d'une machine à découper les calottes selon une ou plusieurs des revendications 1 à 21, caractérisé en ce qu'on pose la calotte de verre sur une plaque de coupe, on applique sur la calotte de verre un élément de coupe orienté perpendiculairement à la surface de la calotte de verre, et on fait circuler la calotte de verre sous l'élément de coupe par un déplacement de la plaque de coupe, de manière que des lignes de coupe prédéterminées soient formées dans la calotte de verre, le mouvement de la calotte de verre étant guidé le long d'une surface bombée définie par sa surface supérieure.

23. Procédé selon la revendication 22, caractérisé en ce que, lors de la coupe de régions courbes des lignes de coupe, une molette de coupe utilisée comme élément de coupe tourne de manière qu'elle roule toujours selon la direction de la ligne de coupe.

24. Procédé selon la revendication 22 et/ou 23, caractérisé en ce que, lors de la coupe de régions courbes des lignes de coupe, la vitesse de coupe est abaissée comparativement à la coupe de régions rectilignes des lignes de coupe.

25. Procédé selon une ou plusieurs des revendication 22 à 24, caractérisé en ce que dans une calotte de verre, on forme dans une unique opération de travail, plusieurs coupes de forme, chacune pour un élément de verre à découper, des coupes libres étant aussi formées dans cette unique opération de travail.
